# EUROPEAN PATENT SPECIFICATION

(11) **EP 2 754 937 B1**
(45) Date of publication and mention of the grant of the patent: **21.09.2016**
(21) Application number: 14445001.2
(22) Date of filing: 09.01.2014
(51) Int. Cl.: F16L 5/10, F16L 5/14

(54) **Closure and method for its use**
Dichtpackung und deren Verwendung
Unité de prise mâle destinée à une entrée de câble

(30) Priority: 14.01.2013 SE 1300032
(43) Date of publication of application: 16.07.2014
(73) Proprietor: Uppgren, Andreas, 587 27 Linköping (SE)
(72) Inventor: Uppgren, Andreas, 587 27 Linköping (SE)
(74) Representative: Berglund, Erik Wilhelm

(56) References cited:
- EP-A1- 2 397 737
- EP-A1- 2 492 565
- DE-A1- 10 054 833
- DE-A1- 19 547 268
- DE-A1- 19 710 789
- DE-U- 1 869 213
- DE-U1- 29 908 044
- US-A- 5 442 140

## Description

At building, renovating and replacement of plumbing in houses with concrete vaults it is known to drill a hole through the vault for each pipe. When the designated pipe has been inserted into the hole on the bottom side of the vault a disc or two are arranged covering the intermediate space between pipe and hole, whereafter concrete is filled from above in the intermediate space between pipe and hole. The number of holes are many that are to be drilled (hole sawed) and sealed in the bottom.

In order to make the installing of tubes and pipes more rational one would like the use one single hole through which several different tubes are arranged, but this is not possible since then the sealing or closing of the bottom of the drilled hole with present methods would be too work demanding.

From DE 299 08 044 U1 it is known to provide a sealing with a cylindric sealing body that is arranged around tubes and then tubes and sealing body are pushed into a conical sleeve that has a surrounding flange in its wider end in contact with the edge of a hole. When the sealing body is pushed into the sleeve it is compressed. DE 195 47 268 A1 concerns a passage for tubes through a floor of a rail vehicle through a pot with an outward extending flange that rest on the floor. The pot has holes for the tubes in the bottom and is filled with a mounting foam.

In order to eliminate the above problem it is suggested in accordance with the invention of method in accordance with claim 7 and a closure in accordance with claim 1.

By means of the invention it becomes simple and rational to collect several tubes with different objects in one common passage through vaults or roofs. With the invention also follow the possibility of further simplification since it is possible for each vault passage to collect the tubes that are going through the vault hole to a unity package that is then lifted in as one unit. At this one can even consider the pipes in the unit being already provided with required connections (also side connections) and these packages can be prefabricated and may even be provided with closures in accordance with the invention that only has to be pushed up and into the hole in the vault. The tubes in such a package can at delivery be taped together and marked with numbers so that joining easily can take place. In the latter case no slots are necessary between the tube holes and the outer circumference but for tubes that are to be mounted separately after a tube package.

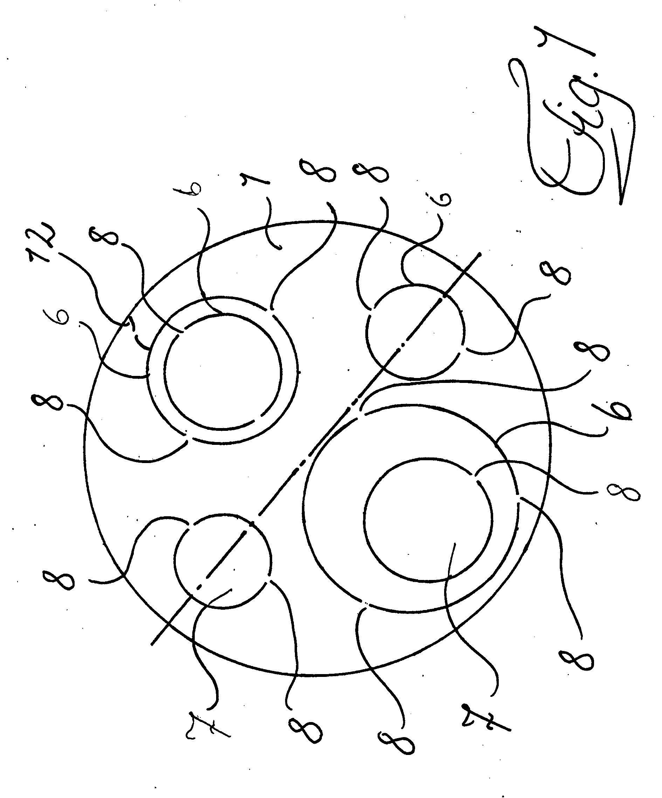

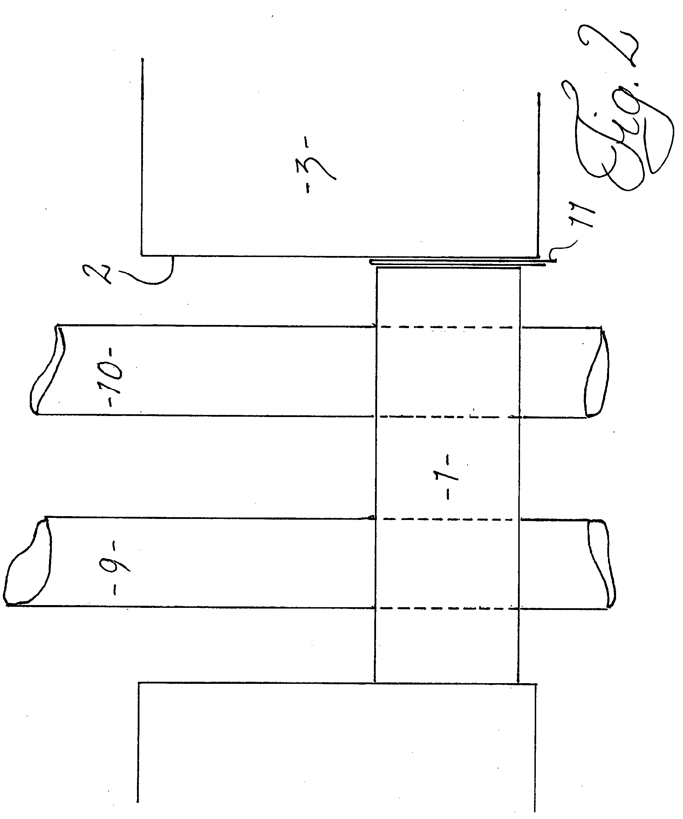

Further developments of the invention as well as advantageous result thereof are apparent from the subclaims as well as the following embodiment in connection with the drawings. In the drawings fig 1 depicts a closure seen from above, and fig 2 a vertical section from a hole in a vault with mounted closure.

The closure shown in fig 1 comprise a disc of resilient compressible and backspringing foam plastic or foam rubber a few centimeters thick and with an outer diameter in a fabricated and freely non compressed stage, that is somewhat larger than the diameter of the hole 2 in the vault 3. In the closure 1 circular slots 1 - 6 are stamped or cut out, the inner diameter being slightly less or just as large as the outer diameter of the tube in question. The cut out plugs may remain until the closure is to be used, when they easily can be pushed out of the holes that are to be used. In the shown case the circular slots are not quite continues but have short disruptions /connections 8 that easily but not unintentionally can be ripped off when you want to push out the plug in order to insert a tube. The circular slot can be surrounded by a slot with a large diameter for the arrangement of tubes with different diameters, but in the same place.

At the mounting of the tubes 9, 10 these can one by one be arranged extending up through the hole 2 in the vault, and possibly be joined to tubes coming from the story below. The plugs for the holes that are to be used are pushed out and with scissors or knifes slots 12 are made out to the outer edge of the closure. The closure is from below or above the vault pushed in between the tubes, whereafter the material between the slots is folded out between the tubes so that these are enclosed. The closure is then pushed up or down respectively along the tubes and into the vault hole. Since diameter of the closure is larger than that of the vault hole the foam material in the closure is compressed so that it not only close sealingly against the hole but also against the tubes. This since due to the compression increased pressure in the closure also provide an increased friction both against the vault and against the tubes.

In order to secure the retention in the vault hole the outer edge of the closure may be provided with glue or adhesive, advantageously self adhering. It is also possible to prepare the bottom end of the hole to increase the adhering. In the case with a self adhering coating on the closure a protective paper 11 (shown to the right in fig 2) folded double may be arranged over the self adhesive area in order to be pulled out downwards when the closure is in place (to the right in fig 2). Adherence is increased, the adhesive area is protected at the same time as the insertion in the vault hole is facilitated. In order to prevent the adhesive from preventing glue or the adhesive the hamper the expansion of the closure inside the vault hole the adhesive or glue may in advantageously make up a net, for instance by being added in a layer so thin that it is only present on the cut and thereby only in spots open surface of the foam material.

Instead of shearing or cutting of the slots between the tube holes and the outer edge one can conceive these slots being prefabricated but as the slots for the tube holes being intermittent so that the walls are held on place until the connections are pulled apart.

The invented method as well as the closure in accordance with the invention can also be used at vaults of an other material than concrete, for instance brick or rock. Nor is it necessary that the holes are drilled and round. For instance one can consider to arrange a plug for instance of plastic at the place were the insertion hole for the tubes is desired, said plug after casting and hardening easily can be knocked out from the vault. If the hole has a different shape than round a closure is shaped accordingly. The casting material need not to be concrete that also other material be considered, for instance gypsum or plastic.

If only one tube is to be arranged in a circular hole in a vault the foam closure can be constituted by an elongate foam profile that is arranged around the tube with its ends in contact with each other. The ends can be provided with glue to be glued together with each other, for instance with a protective paper on, that it is then pulled off when the connection is to be archived. The ends can be angled in relation to the length direction of the profile. Advantageously the profile is rectangular to its cross section.

The invented closure and the method allow very effective time saving tube handling and enclosing of tubes.

## Claims

1. Closure (1) for the bottom side of holes (2) in vaults (3) intended for the insertion and enclosing of one or several tubes (9; 10) in concrete, **characterized in that** the closure (1) comprise a flexible and compressible material, for instance foam plastic or rubber, with a slightly larger outer dimension than the vault hole (2) that is to be closed and that the closure is provided with holes for the tubes, and that the outer circumference of the closure is provided with glue or adhesive.

2. Closure according to claim 1, **characterized in that** the holes for the tubes are constituted by circular slots (6) with one or several disruptions (8) that connect the closure with the remaining core (7) in the hole.

3. Closure according to claim 1, **characterized in that** from one or several of the holes or partly slotted (6) hole contours, slots or partial slots (12) extend out to the outer circumference of the closure (1).

4. Closure according to any of the preceding claims, **characterized in that** its height or thickness in the direction of the hole or the tubes respectively is larger than the largest distance between hole (2) and tube respectively between the tubes (9, 10).

5. Closure according to any of the preceding claims **characterized in that** the only partly slotted holes (6) have one or several slot interruptions (8) that extend axially in the direction of the hole all the way through the closure.

6. Closure according to any of the preceding claims, **characterized in that** it has a self adhesive coating on its outer perimeter and the protective paper (11) that pull the circumference on the closure together so that it becomes shorter than the circumference of the vault hole.

7. Method for encasing two or several tubes in a common hole in a vault, **characterized in that** after insertion of the tubes (9, 10) in the vault hole a closure (1) according to claim 1 is pushed **in that** enclose respective tubes in the valve hole (3) to a position in the bottom end of the hole whereafter the tubes are incased by concrete or other material being filled from above into the vault hole.

8. Method according to claim 7, **characterized in that** for the holes and the closure (1) that are to be used a slot (12) is cut or sheared to a connection with the outer perimeter of the closure so that the tube in question can pass into the through hole for this.

9. Method according to any of the claims 7 or 8, **characterized in that** the vault hole (2) in its lower edge is cleaned and/or sprayed with a layer improving the adherence of the glue or adhesive on the closure reinforcing layer,

10. Method for fabrication of a closure (1) accordance to claim 1 to 6, **characterized in that** holes and slots6, (6, 12), as well as possibly the outer contour is cut with water cutting.

11. Closure according of claim 1, **characterized in that** it comprise a piece of foam rubber or foam plastic profile that is joined around the tube with the ends in contact with each other.

12. Closure according to claim 11, **characterized in that** the profile essentially has a rectangular cross section.

13. Closure according to claim 11 or 12, **characterized in that** one or both of the ends of the profile are provided with glue.

## Patentansprüche

1. Dichtpackung (1) für die Bodenseite von Öffnungen (2) in Kammern (3), die zum Einsetzen und Umschließen von einem oder mehreren Rohren (9; 10) in Beton bestimmt sind, **dadurch gekennzeichnet, dass** die Dichtpackung (1) ein flexibles und kompromierbares Material, beispielsweise Schaumkunststoff oder Kautschuk, mit geringfügig größeren Außenabmessungen als die Kammeröffnung (2) aufweist, welche abzudichten ist, und dass die Dichtpackung (1) mit Öffnungen für die Rohre versehen ist, und dass der äußere Umfang der Dichtpackung (1) mit Leim oder Klebstoff versehen ist.

2. Dichtpackung (1) nach Anspruch 1, **dadurch gekennzeichnet, dass** die Öffnungen für die Rohre von kreisförmigen Schlitzen (6) mit einer oder mehreren Unterbrechungen (8) gebildet werden, welche die Dichtpackung (1) mit dem restlichen Kern (7) in der Öffnung verbindet.

3. Dichtpackung (1) nach Anspruch 1, **dadurch gekennzeichnet, dass** von einigen oder mehreren der Öffnungen oder von teilweise geschlitzten Öffnungen (6) Öffnungskonturen, Schlitzen oder Teilschlitzen (12) sich nach außen zu dem äußeren Umfang der Dichtpackung (1) erstrecken.

4. Dichtpackung (1) nach einem der vorangehenden Ansprüche, **dadurch gekennzeichnet, dass** ihre Höhe oder Dicke in Richtung der Öffnung oder der Rohre jeweils größer als der größte Abstand zwischen der Öffnung (2) und dem Rohr, bzw. zwischen den Rohren (9; 10) ist.

5. Dichtpackung (1) nach einem der vorangehenden Ansprüche, **dadurch gekennzeichnet, dass** nur die teilweise geschlitzten Öffnungen (6) einen oder mehrere Schlitzunterbrechungen (8) haben, die axial in Richtung der Öffnung durch die Dichtpackung verlaufen.

6. Dichtpackung (1) nach einem der vorangehenden Ansprüche, **dadurch gekennzeichnet, dass** sie einen selbstklebenden Klebstoffüberzug auf dem Außenumfang und ein Schutzpapier (11) hat, welches den Umfang der Dichtpackung(1) derart zusammenzieht, dass sie kleiner als der Umfang der Kammeröffnung ist.

7. Verfahren zum Umschließen von zwei oder mehreren Rohren in einer gemeinsamen Öffnung in einer Kammer, **dadurch gekennzeichnet, dass** nach dem Einsetzen der Rohre (9; 10) in die Kammeröffnung eine Dichtpackung (1) nach Anspruch 1 derart eingedrückt wird, dass sie die zugeordneten Rohre in der Kammeröffnung (3) umgibt, und das Eindrücken an einer Position am Bodenende der Öffnung erfolgt, und dass anschließend die Rohre von Beton oder einem anderen Material umschlossen werden, welches von oben in die Kammeröffnung eingefüllt wird.

8. Verfahren nach Anspruch 7, **dadurch gekennzeichnet, dass** für die Öffnungen und die Dichtpackung (1), welche eingesetzt wird, ein Schlitz (12) eingeschnitten oder eingeformt ist, und eine Verbindung mit dem Außenumfang der Dichtpackung (1) herstellt, so dass das zugeordnete Rohr in die Durchgangsöffnung hierfür durchgehen kann.

9. Verfahren nach einem der Ansprüche 7 oder 8, **dadurch gekennzeichnet, dass** die Kammeröffnung (2) am unteren Rand gereinigt ist, und/oder mit einer Beschichtung besprüht ist, die das Haftvermögen von Leim oder Klebstoff an der Dichtpackungsverstärkungsschicht verbessert.

10. Verfahren zur Herstellung der Dichtpackung (1) nach einem der Ansprüche 1 bis 6, **dadurch gekennzeichnet, dass** die Öffnungen oder Schlitze (6, 12) sowie gegebenenfalls die äußere Kontur mittels Wasserschneiden eingebracht sind.

11. Dichtpackung (1) nach Anspruch 1, **dadurch gekennzeichnet, dass** sie ein Stück von einem Kautschukschaum oder einem Kunststoffschaum mit einem Profil aufweist, das um das Rohr mit den Enden in Kontakt miteinander angeordnet ist.

12. Dichtpackung (1) nach Anspruch 11, **dadurch gekennzeichnet, dass** das Profil im wesentlichen einen rechteckförmigen Querschnitt hat.

13. Dichtpackung (1) nach Anspruch 11 oder 12, **dadurch gekennzeichnet, dass** eines oder beide Enden des Profils mit Leim versehen sind.

## Revendications

1. Fermeture (1) pour le côté inférieur de trous (2) dans des enceintes (3) destinés à l'insertion et à l'enrobage d'un ou plusieurs tubes (9 ; 10) dans du béton, **caractérisée en ce que** la fermeture (1) comprend un matériau flexible et compressible, par exemple de la mousse plastique ou du caoutchouc, avec une dimension extérieure légèrement supérieure au trou de l'enceinte (2) qui doit être fermé, **en ce que** la fermeture est pourvue de trous pour les tubes, et **en ce que** la circonférence externe de la fermeture est pourvue de colle ou d'adhésif.

2. Fermeture selon la revendication 1, **caractérisée en ce que** les trous pour les tubes sont constitués par des fentes circulaires (6) avec une ou plusieurs interruptions (8) qui raccordent la fermeture avec l'âme restante (7) dans le trou.

3. Fermeture selon la revendication 1, **caractérisée en ce que** depuis un ou plusieurs des trous ou contours de trous partiellement fendus (6), des fentes ou des fentes partielles (12) s'étendent jusqu'à la circonférence externe de la fermeture (1).

4. Fermeture selon l'une quelconque des revendications précédentes, **caractérisée en ce que** sa hauteur ou son épaisseur dans la direction du trou ou des tubes respectivement est supérieure à la plus grande distance entre le trou (2) et le tube respectivement entre les tubes (9, 10).

5. Fermeture selon l'une quelconque des revendications précédentes, **caractérisée en ce que** les trous fendus en partie uniquement (6) comportent une ou plusieurs interruptions de fente (8) qui s'étendent axialement dans la direction du trou à travers toute la fermeture.

6. Fermeture selon l'une quelconque des revendications précédentes, **caractérisée en ce qu'**elle comporte un revêtement autoadhésif sur son périmètre externe et le papier protecteur (11) qui rassemblent la circonférence de la fermeture pour qu'elle devienne inférieure à la circonférence du trou d'enceinte.

7. Procédé d'enrobage de deux tubes ou plus dans un trou commun dans une enceinte, **caractérisé en ce qu'**après l'insertion des tubes (9, 10) dans le trou de l'enceinte, une fermeture (1) selon la revendication 1 est poussée de manière à enserrer les tubes respectifs dans le trou de l'enceinte (3) jusqu'à une position à l'extrémité basse du trou, après quoi les tubes sont entourés par du béton ou un autre matériau chargé depuis le haut dans le trou d'enceinte.

8. Procédé selon la revendication 7, **caractérisé en ce que** pour les trous et la fermeture (1) qui doivent être utilisés, une fente (12) est découpée ou cisaillée pour une liaison avec le périmètre externe de la fermeture de sorte que le tube en question puisse passer dans le trou traversant à cet effet.

9. Procédé selon l'une quelconque des revendications 7 ou 8, **caractérisé en ce que** le trou d'enceinte(2) dans son bord inférieur est nettoyé et/ou pulvérisé avec une couche améliorant l'adhérence de la colle ou de l'adhésif sur la couche de renforcement de fermeture.

10. Procédé de fabrication d'une fermeture (1) selon les revendications 1 à 6, **caractérisé en ce que** les trous et les fentes (6, 12), ainsi qu'éventuellement le contour externe sont découpés par découpe à l'eau.

11. Fermeture selon la revendication 1, **caractérisée en ce qu'**elle comprend une pièce de caoutchouc mousse ou un profil de mousse plastique qui est joint autour du tube avec les extrémités en contact les unes avec les autres.

12. Fermeture selon la revendication 11, **caractérisée en ce que** le profil a essentiellement une section rectangulaire.

13. Fermeture selon la revendication 11 ou 12, **caractérisée en ce qu'**une ou les deux extrémités du profil sont pourvues de colle.
